# EUROPEAN PATENT SPECIFICATION

(11) **EP 3 802 101 B1**
(45) Date of publication and mention of the grant of the patent: **16.07.2025**
(21) Application number: 18816149.1
(22) Date of filing: 18.12.2018
(51) Int. Cl.: B32B 5/02, B32B 5/24, B32B 7/12, B32B 11/04, B32B 11/10, B32B 27/12, B32B 27/32, B32B 27/30, B32B 27/40, B32B 27/28

(54) **BITUMINOUS BACKING FOR THE CONSTRUCTION INDUSTRY**
BITUMINIERTES TRÄGERMATERIAL FÜR DIE BAUINDUSTRIE
SUPPORT BITUMINEUX POUR L'INDUSTRIE DE LA CONSTRUCTION

(30) Priority: 28.05.2018 IT 201800005742
(43) Date of publication of application: 14.04.2021
(73) Proprietor: Elements S.r.l., 31048 San Biagio di Callalta (TV) (IT)
(72) Inventor: FAOTTO, Giovanni, 31100 TREVISO (IT); FAOTTO, Ugo, 31100 TREVISO (IT)
(74) Representative: Modiano, Micaela Nadia
(86) International application number: PCT/EP2018/085624
(87) International publication number: WO 2019/228661

(56) References cited:
- EP-A1- 2 364 841
- EP-A1- 2 687 367
- US-A1- 2007 054 129
- US-A1- 2009 318 602
- GALLO PETER: "Asphalt mix reinforced with vegetable fibers", IOP CONFERENCE SERIES: MATERIALS SCIENCE AND ENGINEERING, vol. 236, 1 September 2017 (2017-09-01), GB, pages 012024, XP093066676, ISSN: 1757-8981, Retrieved from the Internet <URL:http://stacks.iop.org/1757-899X/236/i=1/a=012024?key=crossref.b7910834e0603967379f4c4a5f6f6f5e> DOI: 10.1088/1757-899X/236/1/012024
- DAHUNSI BAMIDELE IBUKUNOLUWA ET AL: "PROPERTIES OF BITUMEN MODIFIED WITH WASTE COOKING OIL AND HIGH DENSITY POLYETHYLENE FOR APPLICATIONS IN FLEXIBLE PAVEMENT", PROCEEDINGS OF THE 1ST INTERNATIONAL CONFERENCE ON CONSTRUCTION MATERIALS FOR SUSTAINABLE FUTURE, ZADAR, CROATIA, 19 -21 APRIL 2017, 19 April 2017 (2017-04-19), pages 1 - 8, XP093066684
- NADER NCIRI: "Potential of Waste Oyster Shells as a Novel Biofiller for Hot-Mix Asphalt", APPLIED SCIENCES, vol. 8, no. 3, 11 March 2018 (2018-03-11), CH, pages 415, XP055544129, ISSN: 2076-3417, DOI: 10.3390/app8030415

## Description

The present invention relates to a bituminous backing for the construction industry, i.e. an underlay sheet that can be paired for example with insulating panels for use in construction or with a backing for insulating panels.

Nowadays the essential layers that usually constitute the covering of a building are constituted substantially (starting from the inside and working outward) by a load-bearing structure (wood boarding or concrete slabs), by a vapor barrier or a vapor seal, the purpose of which is to prevent the passage of water vapor (originating from the underlying layers of the building) and its subsequent condensation inside the upper layers, by a layer of insulation to increase the thermal insulation (insulating panel), by a waterproofing membrane to protect the underlying panel (underlay), by an optional layer or layers of ventilation in order to control the hygrometric humidity conditions by way of air recirculation, and by the covering mantle (pantiles, or roof tiles or the like).

Membranes are applied above the insulating panel, by way of adhesive substances or by way of torch-bonding of the bitumen contained in them, or waterproofing sheets (underlay) are applied by way of mechanical affixing.

Traditionally it is known to provide insulating panels made of polyurethane using, as backings, paper, bituminized paper or felt-paper, monobituminized fiberglass, mineralized fiberglass, aluminum, a multilayer film with paper, aluminum and plastic films in different combinations, as described in EP1529895.

These insulating backings are applied on the insulating panel at the time of producing the insulating panel, allowing the polyurethane foam to be contained in the step of expansion thereof and giving dimensional stability to the end product.

The two faces of the insulating panel can be made with the same insulating backing or with different backings, according to the desired finishes.

Traditionally, in order to provide the insulating backing an oxidized bitumen was used or, more recently, a bitumen modified with polymers with high ring and ball values (index of the resistance to temperature of the compound) equal to 130-160°C and low penetration values (2-8 dmm).

On the insulating panel a finishing is then applied with inert materials (either fibrous layers or film) by way of applying it on the outer surface.

Currently therefore bituminous backings are known for insulating panels which are made by applying on a fibrous reinforcement a bituminous compound that comprises polymers typically of fossil origin and inert fillers, see e.g. EP2364841 A1.

Such conventional solutions have several drawbacks: the use of a bituminous compound comprising polymers typically of fossil origin entails a high environmental impact and high levels of emissions of pollutants.

Conventional bituminous backings further require increasing amounts of natural resources, the rising consumption of which results in an increased environmental footprint.

Furthermore, the conventional bituminous backings for panels can have high emissions of VOCs (Volatile Organic Compounds) or harmful compounds, including for example formaldehyde.

Such uses further need to take account of European regulations on safety and the environment, such as the REACH regulation (Registration, Evaluation, Authorization and Restriction of Chemicals), which have an influence on the corporate costs of obtaining the corresponding products.

In order to reduce the enviromental footprint, Namjun Cho et al studied enviromental friendly filler substitutes and reported in Applied Sciences, Vol.8, 8, 415 the use of waste oyster shells as a novel biofiller for hot-mix asphalt pavement applications.

The principal aim of the present application is therefore to solve the above mentioned technical problems, eliminating the drawbacks in the cited known art and hence providing a bituminous backing for the construction industry, i.e. an underlay sheet or in general a backing for insulating panels, which substantially retains the characteristics of conventional bituminous backings, such as flexibility, dimensional stability, reaction to fire classification, mechanical strength and permeability to air, but which at the same time has a reduced environmental impact by keeping pollutant emission levels low.

Within the above aim, an object of the invention is to provide a bituminous backing for the construction industry, such as a membrane or in general an insulating backing that makes it possible to observe the stringent European regulations on safety and the environment.

Another object is to provide a bituminous backing that has a low cost and which can be made with the usual conventional systems.

This aim and these and other objects which will become better apparent hereinafter are achieved by a bituminous backing for the construction industry having the features of claim 1.

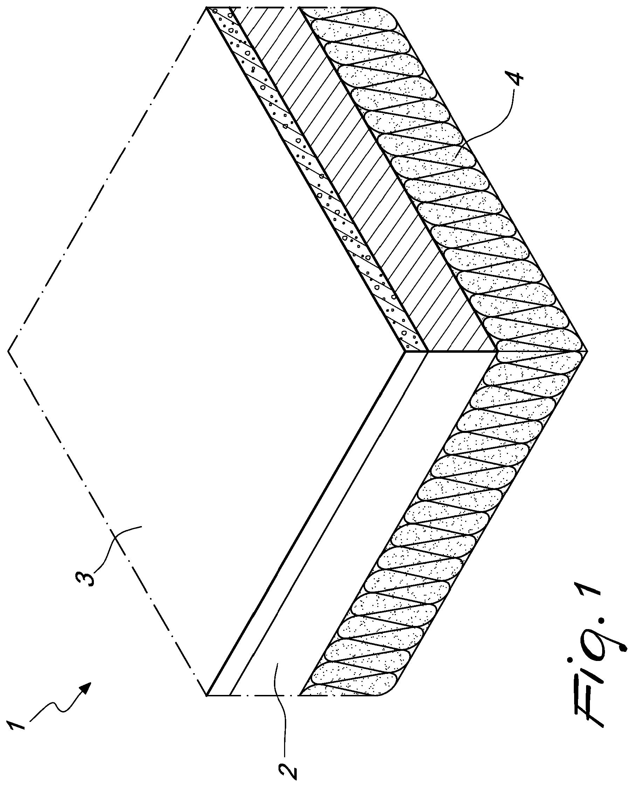

Further characteristics and advantages of the invention will become better apparent from the detailed description of a particular, but not exclusive, embodiment, illustrated by way of example in the accompanying Figure 1 which is a schematic view of the bituminous backing.

In the exemplary embodiments that follow, individual characteristics, given in relation to specific examples, may actually be interchanged with other different characteristics that exist in other exemplary embodiments.

Moreover, it should be noted that anything found to be already known during the patenting process is understood not to be claimed and to be the subject of a disclaimer.

With reference to the figure, the reference numeral 1 designates a bituminous backing for the construction industry which comprises a reinforcement 2 and at least one bituminous layer 3, both of which comprise sustainable and/or naturally sourced raw materials.

In particular the reinforcement 2 is constituted by a fabric or non-woven fabric or by a mesh.

The material with which the reinforcement 2 is made can be of natural origin, of synthetic origin, recycled, or made with polymers obtained from renewable natural sources or of mineral or synthetic origin with a biological (bio-based) binding agent.

One of the solutions shown is to make the reinforcement 2 with non-woven fabric made of glass fiber manufactured with a binding agent of vegetable origin.

The bituminous layer 3 is composed substantially of bitumen of fossil origin or other derivative of the distillation of vegetable oils, such as tall oil, additivated with fillers and polymers.

The fillers are inert materials originating from renewable sources that are carbonates from the milling of egg shells or bivalve mollusc shells.

The polymers are sustainable, such as polymers of synthetic origin obtained from renewable resources, such as for example polyethylene obtained from ethanol originating from the fermentation of sugar cane to produce ethylene, the raw material for synthesizing polyethylene.

In conventional processes, this latter intermediate is obtained from naphtha or from natural gas, both feedstock raw materials of fossil origin.

Alternatively (other kinds of polymers to additivate the bitumen that constitutes the bituminous layer 3) the polymers can be substantially constituted by polymers or copolymers of various types obtained from ingredients of vegetable origin, such as for example acrylic, styrene, vinyl, silicone, silane, polyurethane, vinyl acetate, vinyl versatate ones and/or ones derived from materials of vegetable origin and therefore renewable such as starch and mixtures of starch, polylactic acid (PLA) derived from sugars, cellulose or lignin, natural rubber (caoutchouc), polyhydroxyalkanoates (PHAs), materials of animal origin such as casein.

On the surface of the bituminous layer 3, it is possible to apply a finish in the form of fabrics or non-woven fabrics or films of natural origin or obtained from renewable sources, in the form of inert materials that are natural or recycled or which originate from renewable sources.

Below are some examples of formulation of the bituminous layer 3.

### EXAMPLE 1

(50-70)% distilled bitumen
(10-25)% at least partially environmentally sustainable polymers
(10-30)% inert fillers

### EXAMPLE 2

(55-65)% distilled bitumen
(7-14)% polypropylene
(3-6)% BIO-HDPE (bio-based high density polyethylene)
(0-2)% BIO-LLDPE (bio-based linear low-density polyethylene)
(15-30)% CaCO₃ (calcium carbonate in the form of seashell or eggshell powder)

The BIO-HDPE polymer is therefore a bio-based high-density polyethylene made for example from the fermentation of sugar cane.

The inert fillers can be derived from ground oyster shells.

### EXAMPLE 3

(60)% distilled bitumen
(20)% at least partially environmentally sustainable polymers
(20)% inert fillers

The bituminous backing 3 for the construction industry is paired with insulating panels 4 composed of sustainable polyurethanes made with polyols originating from vegetable oils; an "insulating panel" with low environmental impact is thus obtained, meeting the current market requirements and the strictest European regulations on safety and the environment.

The bituminous backing 3 can be applied to the insulating panel 4 directly during production of the insulating panel 4, as in the case of panels made of EP and phenolic foam, or it can be applied subsequently to the insulating panel 4 already made, for example by way of adhesive bonding, as in the case of fibrous panels, mineral panels or other synthetic panels such as expanded or extruded polyethylene.

Thus it has been found that the invention fully achieves the intended aim and objects, a bituminous backing for the construction industry having been obtained that, while substantially maintaining the characteristics of conventional bituminous backings, such as flexibility, dimensional stability, reaction to fire classification, mechanical strength and permeability to air, at the same time enables a reduced environmental impact while simultaneously keeping pollutant emission levels low.

Furthermore the bituminous backing makes it possible to observe the stringent European regulations on safety and the environment.

Naturally the materials used as well as the dimensions of the individual components of the invention may be more relevant according to specific requirements.

The characteristics indicated above as advantageous, convenient or the like, may also be missing or be substituted by equivalent characteristics.

The disclosures in Italian Patent Application No. 102018000005742 are those from which this application claims priority .

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bituminous backing (1) for the construction industry, the bituminous backing (1) comprising a reinforcement (2), which comprises sustainable and/or naturally sourced raw materials and at least one bituminous layer (3) comprising sustainable and/or naturally sourced raw materials wherein the bituminous layer (3) is composed of bitumen of fossil origin or other derivative of the distillation of vegetable oils, such as tall oil, additivated with fillers and polymers,
said at least one bituminous layer (3) comprising fillers constituted by inert materials originating from renewable sources wherein the renewable sources are carbonates from the milling of egg shells or bivalve mollusc shells and wherein
said bituminous backing (1) is coupled to an insulating panel (4) composed of sustainable polyurethanes made with polyols originating from vegetable oils.

2. The bituminous backing (1) according to claim 1, **characterized in that** said reinforcement (2) is constituted by a fabric or non-woven fabric or by a mesh of natural origin, of synthetic origin, recycled, or made with polymers obtained from renewable natural sources or of mineral or synthetic origin with a biological binding agent.

3. The bituminous backing (1) according to claim 1, **characterized in that** said reinforcement (2) is constituted by non-woven fabric made of glass fiber manufactured with a binding agent of vegetable origin.

4. The bituminous backing (1) according to claim 1, **characterized in that** said polymers are of the sustainable type, such as polymers of synthetic origin obtained from renewable resources, such as polyethylene obtained from ethanol originating from the fermentation of sugar cane in order to produce ethylene.

5. The bituminous backing (1) according to claim 4, **characterized in that** said polymers added to bitumen in the bituminous layer (3) are constituted by polymers or copolymers obtained from ingredients of vegetable origin, such as acrylic, styrene, vinyl, silicone, silane, polyurethane, vinyl acetate, vinyl versatate ones and/or ones derived from materials of vegetable origin and therefore renewable such as starch and mixtures of starch, polylactic acid (PLA) derived from sugars, cellulose or lignin, natural rubber (caoutchouc), polyhydroxyalkanoates (PHAs), materials of animal origin such as casein.

6. The bituminous backing (1) according to claim 1, **characterized in that** a finish is applied to the surface of said bituminous layer (3) in the form of fabrics or non-woven fabrics or films of natural origin or obtained from renewable sources, in the form of inert materials that are natural or recycled or which originate from renewable sources.

7. The bituminous backing (1) according to claim 1, **characterized in that** said bituminous layer (3) is composed of: (50-70)% distilled bitumen, (10-25)% environmentally sustainable polymers, (10-30)% inert fillers.

8. The bituminous backing (1) according to claim 1, **characterized in that** said bituminous layer (3) is composed of: (55-65)% distilled bitumen, (7-14)% polypropylene, (3-6)% BIO-HDPE (bio-based high density polyethylene), (0-2)% BIO-LLDPE (bio-based linear low-density polyethylene), (15-30)% calcium carbonate in the form of seashell or eggshell powder.

9. The bituminous backing (1) according to claim 1, **characterized in that** said bituminous layer (3) is composed of: (60)% distilled bitumen, (20)% environmentally sustainable polymers, (20)% inert fillers.

## Patentansprüche

1. Ein bituminöses Trägermaterial (1) für die Bauindustrie, wobei das bituminöse Trägermaterial (1) eine Verstärkung (2) umfasst, die nachhaltige und/oder natürlich erhaltene Rohmaterialien und mindestens eine bituminöse Schicht (3) umfasst, welche nachhaltige und/oder natürlich erhaltene Rohmaterialien umfasst, wobei
die bituminöse Schicht (3) aus Bitumen fossilen Ursprungs oder anderem Derivat aus der Destillation pflanzlicher Öle besteht, wie zum Beispiel Tallöl, dem Füllstoffe und Polymere hinzugefügt wurden, wobei die mindestens eine bituminöse Schicht (3) Füllstoffe umfasst, bestehend aus inerten Materialien, die aus erneuerbaren Quellen stammen, wobei die erneuerbaren Quellen Carbonate aus dem Zerkleinern von Eierschalen oder zweischaligen Muschelschalen sind und wobei
das bituminöse Trägermaterial (1) mit einer Isolierplatte (4) verbunden ist, bestehend aus nachhaltigen Polyurethanen, die mit Polyolen hergestellt sind, welche aus pflanzlichen Ölen stammen.

2. Das bituminöse Trägermaterial (1) gemäß Anspruch 1, **dadurch gekennzeichnet, dass** die Verstärkung (2) aus einem Textilmaterial oder Vliesstoff oder aus einem Maschenwerk natürlichen Ursprungs, synthetischen Ursprungs, recycelt oder aus Polymeren hergestellt ist, die aus erneuerbaren natürlichen Quellen mineralischen oder synthetischen Ursprungs mit einem biologischen Bindemittel gewonnen werden.

3. Das bituminöse Trägermaterial (1) gemäß Anspruch 1, **dadurch gekennzeichnet, dass** die Verstärkung (2) aus Vliesstoff hergestellt ist, bestehend aus Glasfaser, hergestellt mit einem Bindemittel pflanzlichen Ursprungs.

4. Das bituminöse Trägermaterial (1) gemäß Anspruch 1, **dadurch gekennzeichnet, dass** die Polymere vom nachhaltigen Typ sind, zum Beispiel Polymere synthetischen Ursprungs, die aus erneuerbaren Ressourcen gewonnen wurden, zum Beispiel Polyethylen, gewonnen aus Ethanol, das aus der Fermentation von Zuckerrohr stammt, um Ethylen herzustellen.

5. Das bituminöse Trägermaterial (1) gemäß Anspruch 4, **dadurch gekennzeichnet, dass** die Polymere, die zum Bitumen in der bituminösen Schicht (3) hinzugefügt werden, aus Polymeren oder Copolymeren bestehen, gewonnen aus Bestandteilen pflanzlichen Ursprungs, wie z. B. Acryl, Styrol, Vinyl, Silikon, Silan, Polyurethan, Vinylacetat, Vinylversatat, und/oder abgeleitet von Materialien pflanzlichen Ursprungs und daher erneuerbar, wie z. B. Stärke und Mischungen von Stärke, Polymilchsäure (polylactic acid, PLA), abgeleitet von Zuckern, Zellulose oder Lignin, Kautschuk, Polyhydroxyalkanoate (PHAs), Materialien tierischen Ursprungs, wie z. B. Kasein.

6. Das bituminöse Trägermaterial (1) gemäß Anspruch 1, **dadurch gekennzeichnet, dass** eine Oberflächenbeschichtung auf die Oberfläche der bituminösen Schicht (3) aufgetragen wird in Form von Textilien oder Vliesstoff oder Folien natürlichen Ursprungs oder aus erneuerbaren Quellen, in Form inerter Materialien, die natürlich oder recycelt sind oder aus erneuerbaren Quellen stammen.

7. Das bituminöse Trägermaterial (1) gemäß Anspruch 1, **dadurch gekennzeichnet, dass** die bituminöse Schicht (3) aus Folgendem besteht: (50-70) % destilliertes Bitumen, (10-25)% umweltfreundliche Polymere, (10-30)% inerte Füllstoffe.

8. Das bituminöse Trägermaterial (1) gemäß Anspruch 1, **dadurch gekennzeichnet, dass** die bituminöse Schicht (3) aus Folgendem besteht: (55-65)% destilliertes Bitumen, (7-14)% Polypropylen, (3-6)% BIO-HDPE (biobasiertes Polyethylen hoher Dichte), (0-2)% BIO-LLDPE (biobasiertes lineares Polyethylen niedriger Dichte), (15-30)% Calciumcarbonat in Form von Muschel- oder Eierschalenpulver.

9. Das bituminöse Trägermaterial (1) gemäß Anspruch 1, **dadurch gekennzeichnet, dass** die bituminöse Schicht (3) aus Folgendem besteht: (60)% destilliertes Bitumen, (20)% umweltfreundliche Polymere, (20)% inerte Füllstoffe.

## Revendications

1. Support bitumineux (1) pour l'industrie de la construction, le support bitumineux (1) comprenant un renfort (2) qui comprend des matières premières durables et/ou d'origine naturelle et au moins une couche bitumineuse (3) comprenant des matières premières durables et/ou d'origine naturelle, où la couche bitumineuse (3) est composée de bitume d'origine fossile ou d'autres dérivés de la distillation d'huiles végétales, tels que le tall oil, additivé avec des charges et des polymères, ladite au moins une couche bitumineuse (3) comprenant des charges constituées de matériaux inertes provenant de sources renouvelables, les sources renouvelables étant des carbonates provenant du broyage de coquilles d'œufs ou de coquilles de mollusques bivalves, et où ledit support bitumineux (1) est couplé à un panneau isolant (4) composé de polyuréthanes durables fabriqués à partir de polyols provenant d'huiles végétales.

2. Support bitumineux (1) selon la revendication 1, **caractérisé en ce que** ledit renfort (2) est constitué d'un tissu ou d'un non-tissé ou d'un maillage d'origine naturelle, d'origine synthétique, recyclé ou fabriqué à partir de polymères obtenus à partir de sources naturelles renouvelables ou d'origine minérale ou synthétique avec un agent liant biologique.

3. Support bitumineux (1) selon la revendication 1, **caractérisé en ce que** ledit renfort (2) est constitué d'un non-tissé en fibre de verre fabriqué avec un agent liant d'origine végétale.

4. Support bitumineux (1) selon la revendication 1, **caractérisé en ce que** lesdits polymères sont de type durable, tels que des polymères d'origine synthétique obtenus à partir de ressources renouvelables, tels que le polyéthylène obtenu à partir d'éthanol provenant de la fermentation de la canne à sucre afin de produire de l'éthylène.

5. Support bitumineux (1) selon la revendication 4, **caractérisé en ce que** lesdits polymères ajoutés au bitume dans la couche bitumineuse (3) sont constitués de polymères ou copolymères obtenus à partir d'ingrédients d'origine végétale, tels que l'acrylique, le styrène, le vinyle, le silicone, le silane, le polyuréthane, l'acétate de vinyle, le versatate de vinyle et/ou ceux dérivés de matériaux d'origine végétale et donc renouvelables tels que l'amidon et les mélanges d'amidon, acide polylactique (PLA) dérivé de sucres, cellulose ou lignine, caoutchouc naturel, polyhydroxyalcanoates (PHA), matériaux d'origine animale tels que la caséine.

6. Le support bitumineux (1) selon la revendication 1, **caractérisé en ce qu'**une finition est appliquée sur la surface de ladite couche bitumineuse (3) sous forme de tissus ou de non-tissés ou de films d'origine naturelle ou obtenus à partir de sources renouvelables, sous forme de matériaux inertes qui sont naturels ou recyclés ou qui proviennent de sources renouvelables.

7. Le support bitumineux (1) selon la revendication 1, **caractérisé en ce que** ladite couche bitumineuse (3) est composée de : (50-70) % de bitume distillé, (10-25) % de polymères écologiquement durables, (10-30) % de charges inertes.

8. Le support bitumineux (1) selon la revendication 1, **caractérisé en ce que** ladite couche bitumineuse (3) est composée de : (55-65) % de bitume distillé, (7-14) % de polypropylène, (3-6) % de BIO-HDPE (polyéthylène haute densité d'origine biologique), (0-2) % de BIO-LLDPE (polyéthylène linéaire basse densité d'origine biologique), (15-30) % de carbonate de calcium sous forme de poudre de coquillages ou de coquilles d'œufs.

9. Support bitumineux (1) selon la revendication 1, **caractérisé en ce que** ladite couche bitumineuse (3) est composée de : (60) % de bitume distillé, (20) % de polymères respectueux de l'environnement, (20) % de charges inertes.
